# EUROPÄISCHE PATENTSCHRIFT

(11) **EP 2 297 444 B1**
(45) Veröffentlichungstag und Bekanntmachung des Hinweises auf die Patenterteilung: **15.08.2012**
(21) Anmeldenummer: 09779614.8
(22) Anmeldetag: 03.06.2009
(51) Int. Cl.: F02D 41/40, F02D 41/24, F02D 41/38

(54) **VERFAHREN UND VORRICHTUNG ZUR DRUCKWELLENKOMPENSATION BEI ZEITLICH AUFEINANDER FOLGENDEN EINSPRITZUNGEN IN EINEM EINSPRITZSYSTEM EINER BRENNKRAFTMASCHINE**
METHOD AND DEVICE FOR THE PRESSURE WAVE COMPENSATION OF CONSECUTIVE INJECTIONS IN AN INJECTION SYSTEM OF AN INTERNAL COMBUSTION ENGINE
PROCÉDÉ ET DISPOSITIF DE COMPENSATION DES ONDES DE PRESSION LORS DES INJECTIONS SUCCESSIVES D'UN SYSTÈME D'INJECTION DE MOTEUR À COMBUSTION INTERNE

(30) Priorität: 07.07.2008 DE 102008040227
(43) Veröffentlichungstag der Anmeldung: 23.03.2011
(73) Patentinhaber: Robert Bosch GmbH, 70442 Stuttgart (DE)
(72) Erfinder: WALTER, Michael, 70806 Kornwestheim (DE); PAPSZT, Zoltan, 70499 Stuttgart (DE); PALMER, Joachim, 70825 Korntal-Muenchingen (DE); BOLLINGER, Stefan, 71672 Marbach Am Neckar (DE)
(86) Internationale Anmeldenummer: PCT/EP2009/056778
(87) Internationale Veröffentlichungsnummer: WO 2010/003737

(56) Entgegenhaltungen:
- EP-A1- 2 019 195
- WO-A1-2004/090315
- DE-A1- 10 328 789
- DE-A1-102005 036 192
- DE-B3-102006 033 459

## Beschreibung

### Stand der Technik

Die Erfindung betrifft ein Verfahren und Vorrichtung zur Druckwellen kompensierenden Steuerung eines Einspritzsystems einer Brennkraftmaschine bei zeitlich aufeinander folgenden Teileinspritzungen, gemäß den Oberbegriffen der jeweiligen unabhängigen Ansprüche.

Bei einem Common Rail Diesel-Einspritzsystem werden auf Basis einer Momentenanforderung seitens des Fahrers berechnete Gesamteinspritzmengen auf mehrere Teileinspritzmengen aufgeteilt, und zwar beispielsweise in 2 Voreinspritzungen und eine Haupteinspritzung im Teillastbereich. Die Einspritzmengen dieser Teileinspritzungen sollen dabei möglichst klein sein, um Emissionsnachteile zu minimieren. Andererseits müssen die Voreinspritzungen groß genug sein, damit auch unter Berücksichtigung aller Toleranzquellen stets die motorisch notwendige Mindestmenge abgesetzt wird. Die an sich bekannte Berücksichtigung der genannten Toleranzquellen als Vorhalt für die Sollwerte der Voreinspritzmengen hat allerdings nachteilige Auswirkungen auf die Emissionen.

Zwei mögliche Toleranzquellen für die Mengengenauigkeit bei solchen Teileinspritzungen sind die Drift des jeweiligen Injektors sowie die durch das Öffnen und Schließen des Injektors verursachte Druckwelle. So gehen aus der DE 10 2004 053 418 A1 ein Verfahren und eine Vorrichtung zur Druckwellen kompensierenden Steuerung zeitlich aufeinander folgender Einspritzungen in einem Einspritzsystem einer Brennkraftmaschine hervor, bei denen der durch die Druckwelle ausgelöste Einspritzmengenfehler über eine gesteuerte Druckwellenkompensation kompensiert wird.

Dieses bekannte Verfahren dient insbesondere dazu, ein Neusystem mittels einer Injektorprüfbank oder eines Motorprüfstands mit unterschiedlichen Einspritzszenarien zu vermessen, wobei Teileinspritzmengen, Abstände zwischen den Einspritzungen, der Raildruck, und/oder die Kraftstofftemperatur variiert werden. Die so gemessenen Druckwelleneffekte werden als Mengenwellen dargestellt und als gesteuerte Kompensationsfunktion - auf der Grundlage von entsprechend wellenförmig verlaufenden Ansteuerdauern - in ein Steuergerät abgelegt.

Die mit diesem Stand der Technik erzielbare Mengengenauigkeit bezüglich der zeitlich zweiten Voreinspritzung ist allerdings für zukünftige Toleranzanforderungen, die aus zukünftigen Emissionsgrenzwerten abgeleitet werden, unzureichend. Es ist daher wünschenswert, die vorgenannte Druckwellenkompensation dahingehend zu verbessern, dass der genannte Restfehler bei einer genannten, gesteuerten Druckwellenkompensation im Falle wenigstens zweier zeitlich aufeinander folgender Teileinspritzungen im Betrieb einer Brennkraftmaschine bzw. im Fahrbetrieb eines eine solche Brennkraftmaschine aufweisenden Kraftfahrzeugs ermittelt und adaptiert werden können.

### Zusammenfassung und Vorteile der Erfindung

Der vorliegenden Erfindung liegt der Gedanke zugrunde, eine vorgenannte Druckwellenkompensation bzw. eine Kalibrierung einer solchen Druckwellenkompensation mittels wenigstens zweier zeitlich aufeinander folgender Testeinspritzungen durchzuführen.

Es wird vorgeschlagen, eine Korrektur der Druckwellenkompensation, im Schubbetrieb der Brennkraftmaschine, zu ermitteln. Gemäß einer bevorzugten Ausgestaltung der Erfindung werden in dem genannten Betriebszustand der Brennkraftmaschine bei einem Zylinder der Brennkraftmaschine zwei genannte Testeinspritzungen, bevorzugt zwei Voreinspritzungen, mit einem vorgegebenen zeitlichen Abstand zueinander angesteuert und dabei bevorzugt bereits eine zuvor mittels der an sich bekannten Methode der Nullmengenkalibrierung ermittelte Driftkorrektur angewendet. Danach wird die Gesamteinspritzmenge beider Testeinspritzungen wiederum nach der Methode der Nullmengenkalibrierung ermittelt. Die Abweichung von der erwarteten Gesamteinspritzmenge wird als Fehler der Druckwellenkompensation interpretiert und daraus ein Korrekturwert für die Druckwellenkompensation berechnet. Durch Veränderung der jeweiligen Ansteuerdauern, oder anderer Ansteuerparameter bei der Einspritzung, wird dieser berechnete Korrekturwert so lange iterativ variiert, bis die gemessene Gesamteinspritzmenge die Summe der Solleinspritzmengen der beiden Testeinspritzungen ergibt.

Der sich bei der genannten Iteration ergebende Korrekturwert der Druckwellenkompensation wird schließlich nicht-flüchtig, bevorzugt in einen EEPROM des Einspritzsystems oder eines Steuergeräts der Brennkraftmaschine, gespeichert und im befeuerten Betrieb der Brennkraftmaschine bzw. im Fahrbetrieb eines zugrunde liegenden Kraftfahrzeugs bei der dann vorgenommenen üblichen Druckwellenkompensation angewendet.

In einer bevorzugten Ausführungsform ist zusätzlich eine Gegendruckkompensation angeordnet bzw. vorgesehen, mittels der sich die Effizienz der Druckwellenkompensation weiter verbessern lässt.

Der Vorteil der Erfindung liegt darin, dass die Sollwertvorgabe für die Einspritzmenge einer zeitlich zweiten Teileinspritzung in der Regel reduziert wird, was sich vorteilhaft auf die Emissionen der Brennkraftmaschine auswirkt, bei gleichzeitig relativ geringer Geräuschentwicklung bei der Verbrennung.

### Zeichnung

Die Erfindung wird nachfolgend anhand bevorzugter Ausführungsbeispiele eingehender beschrieben, aus denen weitere Merkmale und Vorteile der Erfindung hervorgehen.

Im Einzelnen zeigen:
- Fig. 1: eine schematische Darstellung eines Einspritzsystems zur Zumessung von Kraftstoff in eine Brennkraftmaschine gemäß dem Stand der Technik, bei dem die vorliegende Erfindung eingesetzt werden kann;
- Fig. 2: eine detaillierte Darstellung der an sich bekannten Berechnung von Ansteuerdauern eines in der Fig. 1 gezeigten elektrisch betätigten Ventils;
- Fig. 3: ein Ablaufdiagramm eines bevorzugten Ausführungsbeispiels des erfindungsgemäßen Verfahrens;
- Fig. 4a, b: die grafische Veranschaulichung eines typischen Amplitudenfehlers (Fig. 4a) sowie eines typischen Phasenfehlers (Fig. 4b) bei der Druckwellenkompensation;
- Fig. 5: eine bevorzugte Ausgestaltung einer erfindungsgemäßen Vorrichtung anhand eines Blockdiagramms; und
- Fig. 6: ein typischer Zeitablauf einer erfindungsgemäßen Druckwellenkompensation unter Berücksichtigung des Zylindergegendrucks.

### Beschreibung von Ausführungsbeispielen

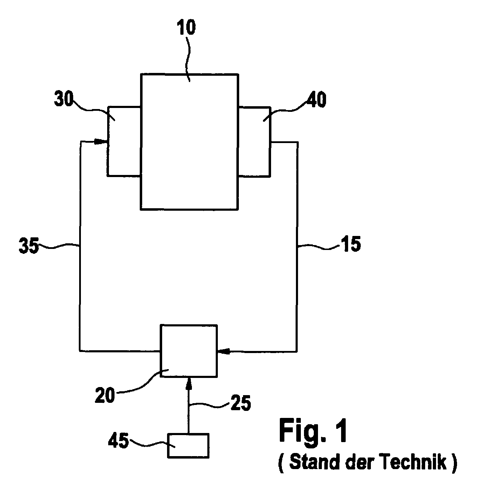

Die Fig. 1 zeigt ein Blockdiagramm der wesentlichen Elemente eines aus der DE 199 45 618 A1 vorbekannten Kraftstoffzumesssystems einer Brennkraftmaschine. Die Brennkraftmaschine 10 erhält von einer Kraftstoffzumesseinheit 30 eine bestimmte Kraftstoffmenge zu einem bestimmten Zeitpunkt zugemessen. Verschiedene Sensoren 40 erfassen Messwerte 15, die dem Betriebszustand der Brennkraftmaschine charakterisieren, und leiten diese zu einem Steuergerät 20. Dem Steuergerät 20 werden ferner verschiedene Ausgangssignale 25 weiterer Sensoren 45 zugeleitet Die erfassten Messwerte 15 charakterisieren den Zustand der Kraftstoffzumesseinheit wie beispielsweise der Fahrerwunsch. Das Steuergerät 20 berechnet ausgehend von diesen Messwerten 15 und den weiteren Größen 25 Ansteuerimpulse 35, mit denen die Kraftstoffzumesseinheit 30 beaufschlagt wird.

Bei der vorliegend angenommenen Brennkraftmaschine handelt es sich vorzugsweise um eine direkteinspritzende und/oder eine selbstzündende Brennkraftmaschine. Die Kraftstoffzumesseinheit 30 kann verschieden ausgestaltet sein. So kann beispielsweise als Kraftstoffzumesseinheit eine Verteilerpumpe eingesetzt werden, bei der ein Magnetventil den Zeitpunkt und/oder die Dauer der Kraftstoffeinspritzung bestimmt.

Des Weiteren kann die Kraftstoffzumesseinheit als Common-Rail-System ausgebildet sein. Bei diesem verdichtet bekanntermaßen eine Hochdruckpumpe Kraftstoff in einem Speicher. Von diesem Speicher gelangt dann der Kraftstoff über Injektoren in die Brennräume der Brennkraftmaschine. Die Dauer und/oder der Beginn der Kraftstoffeinspritzung wird mittels der Injektoren gesteuert. Dabei beinhalten die Injektoren vorzugsweise ein Magnetventil bzw. einen piezoelektrischen Aktor.

Das Steuergerät 20 berechnet in an sich bekannter Weise die in die Brennkraftmaschine einzuspritzende Kraftstoffmenge. Diese Berechnung erfolgt abhängig von verschiedenen Messwerten 15, wie beispielsweise der Drehzahl n, der Motortemperatur, dem tatsächlichen Einspritzbeginn und evtl. noch weiteren Größen 25, die den Betriebszustand des Fahrzeugs charakterisieren. Diese weiteren Größen sind beispielsweise die Stellung des Fahrpedals oder der Druck und die Temperatur der Umgebungsluft. Das Steuergerät 20 setzt dann die gewünschte Kraftstoffmenge in entsprechende Ansteuerimpulse der Injektoren um.

Bei den genannten Brennkraftmaschinen wird häufig eine kleine Kraftstoffmenge kurz vor der eigentlichen Haupteinspritzung in den Zylinder zugemessen. Dadurch kann das Geräuschverhalten des Motors wesentlich verbessert werden. Diese Einspritzung wird als Voreinspritzung und die eigentliche Einspritzung als Haupteinspritzung bezeichnet. Des Weiteren kann vorgesehen sein, dass eine kleine Kraftstoffmenge nach der Haupteinspritzung zugemessen wird. Diese wird dann als Nacheinspritzung bezeichnet. Ferner kann vorgesehen sein, dass die einzelnen Einspritzungen in weitere Teileinspritzungen aufgeteilt sind.

Problematisch bei solchen Kraftstoffzumesssystemen ist, dass die elektrisch betätigten Ventile bei gleichem Ansteuersignal unterschiedliche Kraftstoffmengen zumessen können. Insbesondere die Ansteuerdauer, bei der gerade Kraftstoff zugemessen wird, hängt von verschiedenen Faktoren ab. Diese Mindestansteuerdauer führt zu einer Einspritzung, wohingegen Ansteuerdauern kleiner als die Mindestansteuerdauer nicht zu einer Einspritzung führen. Diese Mindestansteuerdauer hängt von verschiedenen Faktoren, wie beispielsweise der Temperatur, der Kraftstoffsorte, der Lebensdauer, dem Raildruck, Fertigungstoleranzen der Injektoren und weiterer Einflüsse ab. Um eine genaue Kraftstoffzumessung erzielen zu können, muss diese Mindestansteuerdauer bekannt sein.

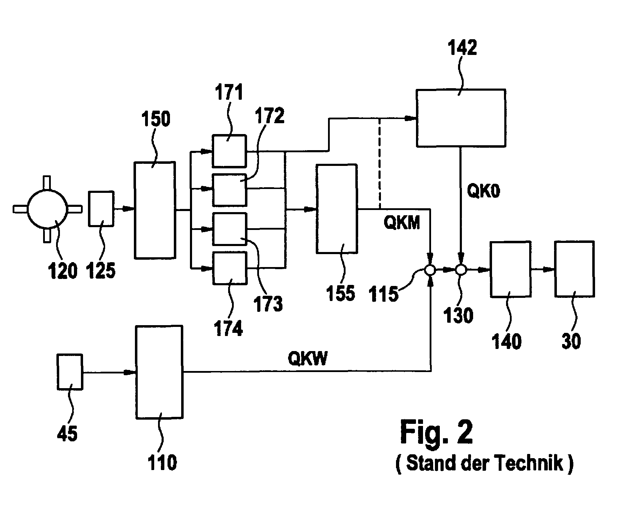

Eine in der DE 199 45 618 A1 ebenfalls beschriebene Vorrichtung zur Steuerung der Kraftstoffzumessung in eine Brennkraftmaschine ist in der Fig. 2 dargestellt. Bereits in Fig. 1 beschriebene Elemente sind mit entsprechenden Bezugszeichen bezeichnet. Die Signale 25 der Sensoren 45 sowie weiterer Sensoren, die nicht dargestellt sind, gelangen zu einer Mengenvorgabe 110. Diese Mengenvorgabe 110 berechnet eine Kraftstoffmenge QKW, die dem Fahrerwunsch entspricht. Dieses Mengensignal QKW gelangt zu einem Verknüpfungspunkt 115, an dessen zweiten Eingang das Ausgangssignal QKM einer zweiten Synchronisierung 155 anliegt. Das Ausgangssignal des ersten Verknüpfungspunktes 115 gelangt zu einem zweiten Verknüpfungspunkt 130 der wiederum eine Ansteuerdauerberechnung 140 beaufschlagt. Am zweiten Eingang des zweiten Verknüpfungspunktes liegt das Signal QK0 der Nullmengenkalibrierung 145 an. In den beiden Verknüpfungspunkten 115 und 130 werden die Mengensignale vorzugsweise additiv verknüpft. Die Ansteuerdauerberechnung 140 berechnet ausgehend von dem Ausgangssignal des Verknüpfungspunktes 130 das Ansteuersignal zur Beaufschlagung der Kraftstoffzumesseinheit 30. Die Ansteuerdauerberechnung berechnet die Ansteuerdauer, mit denen die elektrisch betätigten Ventile beaufschlagt werden.

Auf einem Geberrad 120 sind verschiedene Markierungen angeordnet, die von einem Sensor 125 abgetastet werden. In dem dargestellten Ausführungsbeispiel handelt es sich bei dem Geberrad um ein sogenanntes Segmentrad, das eine der Zylinderzahl entsprechende Anzahl Markierungen, in dem dargestellten Ausführungsbeispiel sind dies vier, aufweist. Dieses Geberrad ist vorzugsweise auf der Kurbelwelle angeordnet. Dies bedeutet, pro Motorumdrehung wird eine Anzahl an den Impulsen erzeugt, die der doppelten Zylinderzahl entspricht. Der Sensor 125 liefert eine entsprechende Anzahl von Impulsen an eine erste Synchronisation 150.

Die erste Synchronisation 150 beaufschlagt einen ersten Regler 171, einen zweiten Regler 172, einen dritten Regler 173 sowie einen vierten Regler 174. Die Anzahl der Regler entspricht der Zylinderzahl. Die Ausgangssignale der vier Regler gelangen dann zu der zweiten Synchronisation 155. Des Weiteren gelangen die Ausgangssignale der Regler zur Nullmengenkalibrierung 142. Alternativ kann auch das Ausgangssignal der zweiten Synchronisation der Nullmengenkalibrierung 142 zugeleitet werden. Diese Alternative ist mit einer gestrichelten Linie dargestellt.

Eine solche Einrichtung, die ohne Nullmengenkalibrierung 142 ausgestattet ist, ist in der DE 195 27 218 detaillierter dargestellt. Diese Einrichtung arbeitet wie folgt. Ausgehend von verschiedenen Signalen, wie beispielsweise einem Signal, das den Fahrerwunsch kennzeichnet, bestimmt die Mengenvorgabe 110 das Kraftstoffmengenwunschsignal QKW, das erforderlich ist um das vom Fahrer gewünschte Moment bereitzustellen. Neben dem Fahrerwunschsignal können auch noch weitere Signale verarbeitet werden. Insbesondere wird neben dem Fahrerwunschsignal auch das Drehzahlsignal und verschiedene Temperatur- und Druckwerte verarbeitet. Des Weiteren besteht die Möglichkeit, dass von anderen Steuereinheiten Signale an die Mengenvorgabe übermittelt werden, die einen Momentenwunsch und/oder einen Mengenwunsch anfordern. Eine solche weitere Steuereinrichtung kann z. B. eine Getriebesteuerung sein, die während des Schaltvorganges das Moment vom Motor beeinflusst.

Aufgrund von Toleranzen, insbesondere der Kraftstoffzumesseinheit 30 entstehen Abweichungen zwischen der gewünschten Einspritzmenge und der tatsächlich eingespritzten Kraftstoffmenge. Dabei messen die einzelnen Zylinder der Brennkraftmaschine in der Regel bei gleichem Ansteuersignal unterschiedliche Kraftstoffmengen zu. Diese Streuungen zwischen den einzelnen Zylindern werden üblicherweise mit einer Mengenausgleichsregelung (MAR) ausgeregelt. Eine solche Mengenausgleichsregelung ist schematisch im oberen Teil der Fig. 2 dargestellt. Zur Mengenausgleichsregelung ist jedem Zylinder der Brennkraftmaschine ein Regler zugeordnet. So ist dem ersten Zylinder der erste Regler 171, dem zweiten Zylinder der zweite Regler 172, dem dritten Zylinder der dritte Regler 173 und dem vierten Zylinder der vierte Regler 174 zugeordnet. Dabei kann auch vorgesehen sein, dass lediglich ein Regler vorgesehen ist, der abwechselnd den einzelnen Zylindern zugeordnet ist. Mittels des Sensors 125 und des Geberrades 120 bestimmt die erste Synchronisation 150 einen Sollwert und einen Istwert für jeden einzelnen Regler. Dabei ist vorgesehen, dass zum Ausgleich von Toleranzen des Geberrades und zur Kompensation von Torsionsschwingungen eine spezielle Filterung des Signals des Sensors 125 erfolgt. Die Ausgangssignale der Regler 171 bis 174 werden einer zweiten Synchronisation 155 zugeführt, die eine Korrekturmenge QKM bereitstellt, mit dem der Mengenwunsch QKW korrigiert wird.

Diese Mengenausgleichsregelung ist so ausgebildet, dass die Regler, die den einzelnen Zylindern zugemessene Menge auf einen gemeinsamen Mittelwert regeln. Misst ein Zylinder aufgrund von Toleranzen eine erhöhte Kraftstoffmenge zu, so wird für diesen Zylinder eine negative Kraftstoffmenge QKM zur Fahrerwunschmenge QKW hinzuaddidiert. Misst ein Zylinder zu wenig Kraftstoffmenge zu, so wird eine positive Kraftstoffmenge QKM zur Fahrerwunschmenge QKW hinzuaddiert. Bei solchen Mengenfehlern tritt eine Drehungleichförmigkeit auf. Diese wirkt sich dahingehend aus, dass dem Drehzahlsignal Schwingungen überlagert sind deren Frequenz der Nockenwellenfrequenz und/oder Vielfachen der Nockenwellenfrequenz entsprechen. Diese Anteile im Drehzahlsignal mit Nockenwellenfrequenz charakterisieren die Drehungleichförmigkeit und werden durch die Mengenausgleichsregelung auf Null ausgeregelt.

Mengenmittelwertfehler können mit dieser Mengenausgleichsregelung nicht korrigiert werden. Insbesondere können Fehler, die darauf beruhen, dass unterhalb der genannten Mindestansteuerdauer kein Kraftstoff zugemessen wird, mit einer solchen Mengenausgleichsregelung nicht korrigiert werden.

Befindet sich nun das Fahrzeug im Schubbetrieb, d. h. es findet keine Einspritzung statt, so ist die Brennkraftmaschine bezüglich den den einzelnen Zylindern eingespritzten Kraftstoffmengen gleichgestellt. Daher sind in der Drehzahl keine oder nur geringe Anteile mit Nockenwellenfrequenz vorhanden. Wird bei einem Zylinder N die Ansteuerdauer des Injektors langsam erhöht, so findet oberhalb der genannten Mindestansteuerdauer AD0(N) eine Einspritzung in den Zylinder N statt. Dies führt zu einer Verbrennungsungleichförmigkeit, die wiederum eine Drehzahlungleichförmigkeit zur Folge hat. Insbesondere treten im Drehzahlsignal Schwingungen mit Vielfachen der Nockenwellenfrequenz auf. Diese Nockenwellenfrequenzanteile werden von der Mengenausgleichsregelung erkannt.

Der dem Zylinder N entsprechende Regler bestimmt einen Korrekturwert. Bei Vorliegen des Korrekturwerts der Mengenausgleichsregelung erkennt die Nullmengenkalibrierung 142 diejenige Ansteuerdauer AD0(N) bei der eine von der Nullmenge gerade noch zu unterscheidende Einspritzmenge eingespritzt wird. Der entsprechende Wert AD0(N) wird abgespeichert und bei späteren Zumessungen zur Korrektur der Ansteuerdauer des Zylinders N verwendet. In Fig. 2 ist dies dadurch dargestellt, dass der Wert AD0(N) zur Bildung des Korrekturwertes QK0 verwendet wird.

Aus der DE 199 45 618 A1 gehen ferner ein Verfahren und eine Vorrichtung zur Steuerung eines Kraftstoffzumesssystems einer Brennkraftmaschine hervor, bei denen die Drift eines Injektors über die an sich bekannte Methode der Nullmengenkalibrierung adaptiert und kompensiert werden. Bei dieser Methode wird die Ansteuerdauer wenigstens eines elektrisch betätigten Ventils ausgehend von einem Startwert erhöht oder verringert und die Ansteuerdauer ermittelt, bei der gerade Kraftstoff eingespritzt wird. Die Ansteuerdauer, bei der eine Änderung eines Signals auftritt, wird als Mindestansteuerdauer gespeichert. Als solches Signal wird eine die Drehungsgleichförmigkeit charakterisierende Größe, ein Ausgangssignal einer Lambdasonde oder ein Ausgangssignal einer lonenstromsonde verwendet.

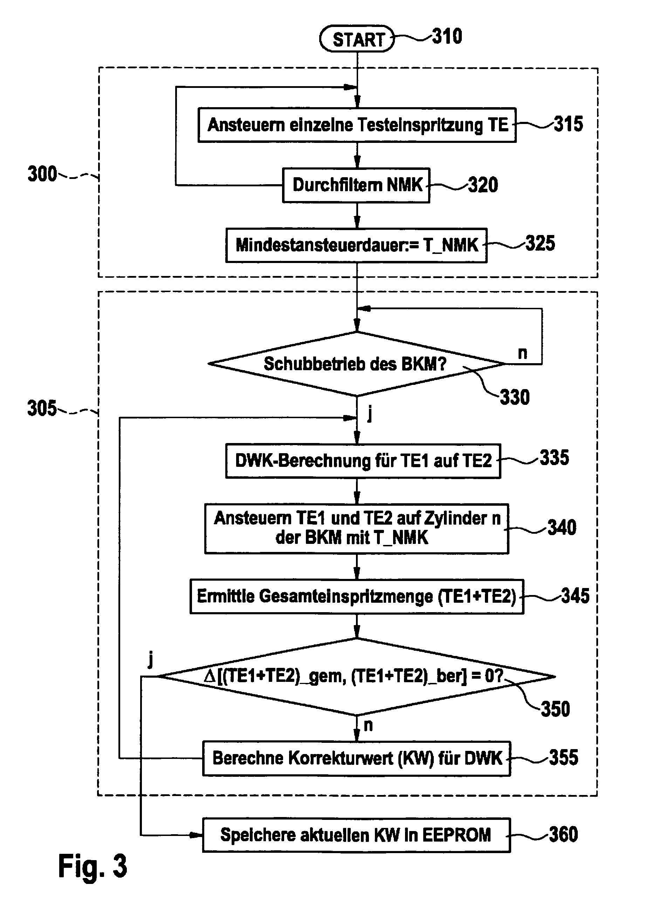

Die Fig. 3 zeigt ein Ablaufdiagramm gemäß einem ersten Ausführungsbeispiel der vorliegenden Erfindung. Die dort gezeigte Routine setzt sich aus einer ersten Lernphase 300 und einer anschließenden zweiten Lernphase 305 zusammen.

Nach dem Start 310 der gezeigten Routine wird in Lernphase ,1'300 an einem einzelnen Zylinder n einer angenommenen Brennkraftmaschine (BKM) eine einzelne Testeinspritzung TE angesteuert 315. Diese Testeinspritzung entspricht in den meisten Fällen einer Voreinspritzung, allerdings kann es sich auch um eine Nacheinspritzung oder jede andere mögliche Form einer Teileinspritzung handeln. Mittels dieser Testeinspritzung 315 wird in Schritt 320 in an sich bekannter Weise eine Nullmengenkalibrierung (NMK) durchgeführt, und zwar so lange, bis eine Mindestansteuerdauer T_NMK vorliegt 325, was durch die Programmschleife angedeutet werden soll.

In der Lernphase ,1' 300 wird demnach die NMK gemäß Stand der Technik (d.h. für eine einzelne Voreinspritzung) zunächst vollständig eingelernt, wobei in üblicher Weise Korrekturen eines Injektormengenabgleichs (IMA) sowie einer Zylindergegendruckkompensation berücksichtigt werden können.

Ein Verfahren und eine Vorrichtung zur Durchführung des Injektormengenabgleichs gehen bspw. aus der vorveröffentlichten DE 102 15 610 A1 hervor. Beim Injektormengenabgleich liegt generell die Erkenntnis zugrunde, dass fertigungsbedingte und vom jeweiligen Injektortyp abhängige Bautoleranzen bei den Injektoren individuell unterschiedliche Einspritzmengen der Injektoren bedingen, trotz einer identischen Ansteuerspannung. Daher werden die Injektoren bereits in der Fertigung einem Injektormengenabgleich unterzogen, bei dem die einzelnen Injektoren angesteuert werden und Korrekturdaten für die Ansteuerdauer oder Ansteuerspannung ermittelt werden, um die genannten individuellen Unterschiede in den Einspritzmengen der einzelnen Injektoren auszugleichen. Die genannten Korrekturdaten werden bevorzugt in einen bei jedem einzelnen Injektor angeordneten digitalen Datenspeicher abgelegt und ermöglichen somit eine individuelle Steuerung des jeweiligen Injektors durch das Motorsteuergerät.

Die Berechnung der Ansteuerdaten zur Steuerung der Injektoren erfolgt mittels Mengenkennfeldern, welche die Beziehung zwischen der Einspritzmenge, dem Raildruck und der Ansteuerzeit beinhalten. Dabei kann der Injektormengenabgleich allerdings nur in solchen Kennfeldbereichen durchgeführt werden, in denen die Einspritzmenge von der Ansteuerdauer messbar abhängig ist.

Das beschriebene Verfahren des Injektormengenabgleichs (IMA) wird bevorzugt bei der vorliegenden Erfindung angewendet.

Das ebenfalls an sich bekannte Verfahren der Gegendruckkompensation ist in der DE 10 2006 026 876 A1 beschrieben. Wie bereits erwähnt, beruht der Einspritzmengenfehler im Wesentlichen darauf, dass die Einspritzmenge vom bei der Einspritzung herrschenden Brennraumdruck abhängt. Der Brennraumdruck bei der Voreinspritzung und/oder der Nacheinspritzung weicht deutlich von dem Brennraumdruck ab, der bei der Haupteinspritzung herrscht. Insbesondere bei hydraulisch gesteuerten Einspritzsystemen, wie beispielsweise bei Common-Rail-Injektoren mit einer elektrischen Ansteuerung und mit einem Steuerraum, hängt das Nadelöffnungsverhalten vom Kräftegleichgewicht an der Düsennadel ab. Dieses Kräftegleichgewicht wird im Wesentlichen durch den Druck im Steuerraum und dem Brennraumdruck bestimmt und über den Zylinderdruck, welcher an der Düsennadel bei geschlossenem Injektor anliegt, zusätzlich beeinflusst, wobei ein hoher Zylindergegendruck das Öffnungsverhalten der Düse unterstützt, d. h. die Einspritzung beginnt bei gleicher elektrischer Ansteuerung zu einem zeitlich früheren Zeitpunkt. Auf der anderen Seite wiederum ist die Einspritzrate vom Gegendruck abhängig, d.h. bei hohem Gegendruck reduziert sich die maximale Einspritzrate, da die Druckdifferenz zwischen dem Raildruck und dem genannten Gegendruck kleiner wird. Durch Berücksichtigung des Zylinderdrucks kann nun die Zumessgenauigkeit erhöht werden. Dies hat weiterhin den Vorteil, dass die Mengenkorrekturfunktionen, die die Einspritzmenge als Eingangsgröße besitzen, am richtigen Betriebspunkt arbeiten.

Auf dem vorliegenden Wert T_NMK basierend wird nun in die zweite Lernphase ,2' 305 übergegangen. In dieser zweiten Lernphase 305 wird in dem vorliegenden Ausführungsbeispiel zunächst mittels der Abfrage 330 und entsprechenden Programmschleife abgewartet, bis ein Schubbetrieb der BKM vorliegt. Liegt dieser Betriebsmodus vor, wird gemäß Schritt 335 in an sich bekannter Weise eine Druckwellenkompensation (DWK) bzw. DWK-Berechnung für den Druckwelleneffekt von TE1 auf TE2 durchgeführt. Dabei kann das in der DE 10 2004 053 418 A1 beschriebene Verfahren zur Anwendung kommen.

Basierend auf dem in Schritt 335 berechneten Wert der Druckwellenkompensation werden in Schritt 340, wiederum an dem einzelnen Zylinder n, zwei Testeinspritzungen TE1 und TE2 vorgenommen, und zwar mit der aus der ersten Lernphase 300 resultierenden Ansteuerdauer T_NMK. Zusätzlich wird in Schritt 345 die Gesamteinspritzmenge ME_GES = ME(TE1) + ME(TE2) der beiden Testeinspritzungen TE1 und TE2 nach dem Prinzip der Nullmengenkalibrierung ermittelt.

Es ist anzumerken, dass die Berechnung der DWK in Schritt 335 insoweit eine Auswirkung auf Schritt 340 hat, als die bei der DWK ermittelten Korrekturen bei den Testeinspritzungen TE1 und TE2 in Schritt berücksichtigt werden müssen. Im Einzelnen gilt dabei der Zusammenhang, dass die zweite Testeinspritzung TE2 mit der Ansteuerdauer T_NMK + DWK-Korrektur (letztere umgerechnet in eine Ansteuerdauer) durchgeführt wird.

In dem nachfolgenden Schritt 350 erfolgt ein SOLL-IST-Vergleich, bei dem geprüft wird, ob die erfasste IST-Menge ME(TE1 + TE2)_gem mit der SOLL-Menge ME(TE1 + TE2)_ber übereinstimmt, d.h. die Differenz Δ dieser beiden Größen gleich Null oder zumindest innerhalb eines empirisch vorgebbaren Schwellwerts nahe Null ist. Ist dies nicht der Fall, wird in Schritt 355 eine neuer Korrekturwert KW für die Druckwellenkompensation iterativ berechnet bzw. bestimmt. Andernfalls wird zu Schritt 360 gesprungen, in dem der aktuelle Korrekturwert KW_aktuell schließlich in den genannten EEPROM abgespeichert wird und daher im befeuerten Betrieb der Brennkraftmaschine bzw. im Fahrbetrieb eines zugrunde liegenden Kraftfahrzeugs bei der üblichen Druckwellenkompensation zur Verfügung steht.

In der Lernphase ,2' 305 werden demnach die beiden Testeinspritzungen unter Anwenden der zuvor bereits ermittelten Driftkorrektur aus Lernphase 1 durchgeführt, wobei auch hier in üblicher Weise Korrekturen einer IMA sowie einer Zylindergegendruckkompensation berücksichtigt werden können. Zusätzlich wird die Druckwellenkompensation für die Auswirkung der zeitlich ersten Voreinspritzung auf die zeitlich zweite Voreinspritzung berechnet und das Ergebnis angewendet. Die Druckwellenkompensation wird dabei gemäß dem Stand der Technik berechnet, wobei allerdings hervorzuheben ist, dass die Druckwellenkompensation erfindungsgemäß bei der Kalibrierung einer von mehreren Voreinspritzungen verwendet wird.

Wie beschrieben, wird die Gesamteinspritzmenge beider Testeinspritzungen nach dem Prinzip der NMK ermittelt, und zwar in an sich bekannter Weise aus einem Drehzahl-, Sauerstoff- und/oder lonenstromsignal. In die Berechnung eines jeweiligen Korrekturwerts für die Druckwellenkompensation geht gemäß dem erfindungsgemäß vorgeschlagenen Verfahren ein bereits gelernter Korrekturwert ein.

Zu dem beschrieben Grundprinzip der Erfindung sind verschiedene Varianten hinsichtlich der im Kalibriervorgang variierten Stellgröße sowie des zugeordneten Rückführzweig in die Druckwellenkompensation möglich, von denen nun drei Varianten näher beschrieben werden sollen.

### 1. Amplitudenfehler

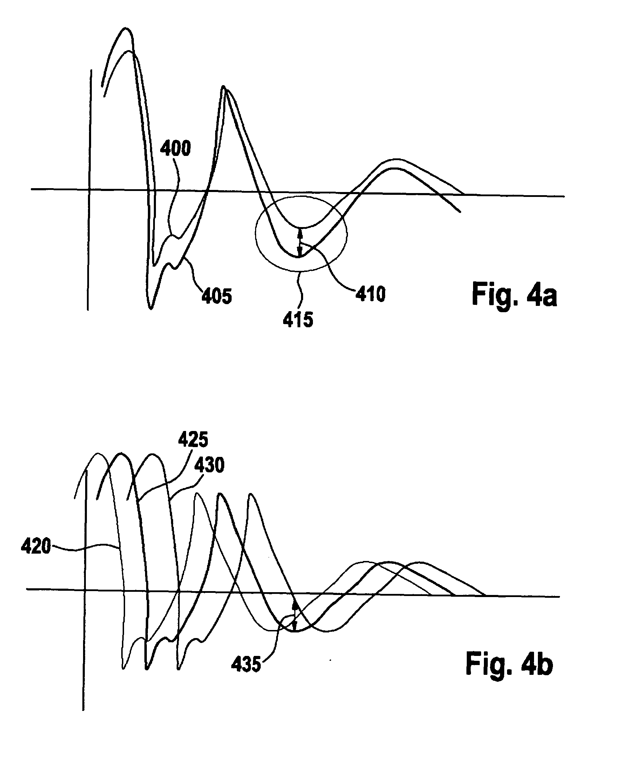

Die vorbeschriebene Kalibriersequenz geht von der Annahme aus, dass der dominante Fehler der Druckwellenkompensation ein Δmplitudenfehler ist (siehe Fig. 4a). In der Fig. 4a sind ein gemessener Druckwellenverlauf 400 als Stellgröße sowie ein im genannten Rückführzweig in die Druckwellenkompensation sich ergebender Druckwellenverlauf 405 gegenüber gestellt. In dem hervorgehobenen Kurvenabschnitt 415 ergibt sich vorliegend eine Amplitudenabweichung 410 zwischen den beiden Kurven 400, 405. Um diesen Amplitudenfehler zu berücksichtigen, wird bei festem zeitlichen Abstand der beiden Testeinspritzungen TE1, TE2 die Ansteuerdauer der zeitlich zweiten Testeinspritzung variiert, was im Wesentlichen eine Änderung der Druckwellenamplitude bewirkt. Der Rückführzweig in die Druckwellenkompensation wird in der Berücksichtigung der Amplitude der Mengenwelle gesetzt.

Eine mögliche Ursache für den genannten Amplitudenfehler ist die übliche Vorgehensweise bei der Vermessung der Druckwellenkompensation, welche in der Regel an einer Hydraulikprüfbank mit Prüföl durchgeführt wird. Unterschiede in der Dämpfung zwischen realem Dieselkraftstoff und Prüföl können den Amplitudenfehler verursachen.

### 2. Phasenfehler

Alternativ ermöglicht die vorliegende Erfindung, einen Phasenfehler (Fig. 4b) der Druckwellenkompensation mit dem Verfahren zu lernen. Hierzu wird bei festen Ansteuerdauern der beiden Teil- bzw. Testeinspritzungen der zeitliche Abstand zwischen den beiden Einspritzungen so variiert, dass sich die hier dargestellten drei phasenverschobenen Druckwellenverläufe 420, 425 und 430 ergeben. So ergibt sich zwischen den beiden Kurven 425, 430 die gezeigte Phasenverschiebung 435. Entsprechend wird dann ein Rückführzweig in die Druckwellenkompensation gewählt, der in die Berücksichtung der Phase geht.

Eine mögliche Ursache für den genannten Phasenfehler ist, dass als Eingangsgröße in die Druckwellenkompensation bezüglich der Phase der Druckwelle der elektrische Abstand zwischen den Einspritzungen fungiert, welcher bspw. im Steuergerät bekannt ist. Maßgeblich für die reale Druckwelle ist jedoch der hydraulische Abstand der Druckwelle. Durch die Alterung der Injektoren ist die - in der Applikation der DWK hinterlegte - Übertragung von elektrischem auf hydraulischen Abstand im gealterten Zustand nicht mehr gültig, wodurch ein Phasenfehler entsteht.

### 3. Frequenzfehler

Durch geeignete Variation des Abstandes zwischen den beiden Testeinspritzungen TE1 und TE2 kann die Frequenz der Mengen- bzw. Druckwelle erfasst werden, und zwar entweder anhand des Abstandes von Nulldurchgängen oder anhand des Abstandes zweier Minimum/Maximum(MIN/MAX)-Peaks. Hierbei wird im Unterschied zur Variante 2. (Phasenfehler) nicht der Abstand in Richtung eines Zielwerts der Gesamt-Einspritzmenge iteriert. Vielmehr wird zur Bestimmung der Frequenz der Mengen- bzw. Druckwelle ein vordefinierter Parameterbereich des Abstands durchfahren, innerhalb dessen jeweils die Gesamt-Einspritzmenge gemessen wird. In der Druckwellenkompensation wird entsprechend ein Rückführzweig gewählt, der in die Berücksichtung der Frequenz geht.

Eine mögliche Ursache für den genannten Frequenzfehler ist die Abhängigkeit der Frequenz der Druckwelle von der Kraftstofftemperatur und dem Raildruck, und zwar insbesondere in der Kraftstoffzuleitung, wobei diese beiden Größen nur ungenau bekannt sind. Für diese Größen gilt im Einzelnen:
a. Die Temperatur für die Bestimmung der Frequenz der Druckwelle wird gemäß dem Stand der Technik als Mischtemperatur aus der Kraftstofftemperatur (dieser Sensor sitzt im Zulauf der Hochdruckpumpe) und aus der Kühlmitteltemperatur gebildet. Die reale Temperatur in der Leitung kann nur in grober Näherung durch die bestehende Struktur abgebildet werden, insbesondere im dynamischen Betrieb.
b. Der Raildruck in der Leitung ist durch den Raildrucksensor bekannt, allerdings wird dabei angenommen, dass der Druck an der Position des Sensors gleich dem Druck in der Leitung ist, was näherungsweise gültig ist unter Vernachlässigung von Druckschwingungen im Rail und Drosselverlusten. Der individuelle Sensorfehler des Raildrucksensors wirkt sich zusätzlich voll auf die Toleranz der Druckwellenkompensation aus.

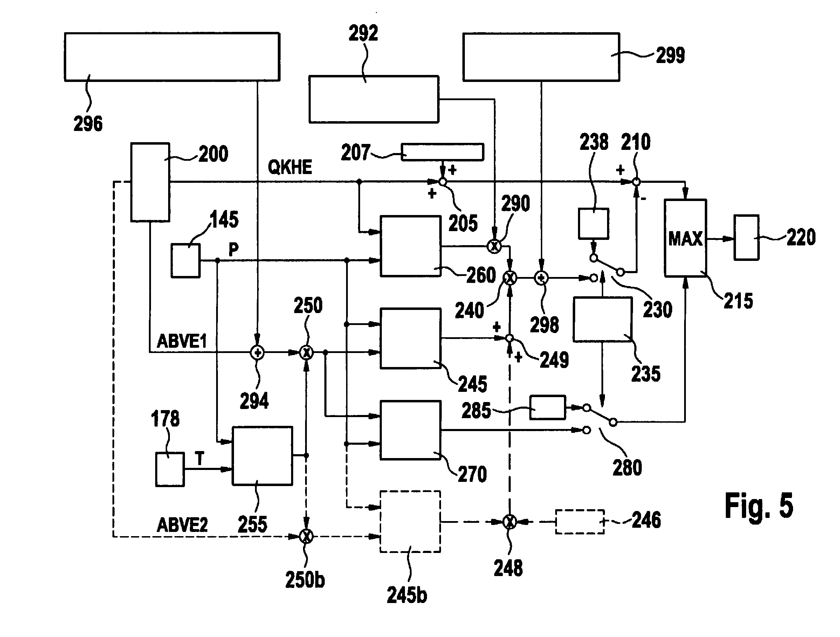

In der Fig. 5 ist ein Blockdiagramm eines bevorzugten Ausführungsbeispiels einer erfindungsgemäßen Vorrichtung zur Steuerung eines hier betroffenen Einspritzsystems dargestellt. Die dort dargestellte Struktur ist vorzugsweise in einer Steuereinheit einer hier nicht gezeigten Brennkraftmaschine enthalten. Insbesondere ist die Struktur als Programm für die Durchführung des entsprechenden Verfahrens ausgebildet.

Das im Folgenden beschriebene Verfahren zur Betrieb einer solchen Vorrichtung gilt insbesondere für die Korrektur des Einflusses einer ersten Testeinspritzung auf eine nachfolgende zweite Testeinspritzung und den Einfluss der zweiten Testeinspritzung auf eine unmittelbar nachfolgende Haupteinspritzung. Bei einer besonders vorteilhaften Ausgestaltung wird der Einfluss zweier Testeinspritzungen auf die Haupteinspritzung korrigiert.

Im Folgenden wird die Korrektur am Beispiel der Korrektur der Menge der Haupteinspritzung QKHE beschrieben. Eine Mengenvorgabe 200 bestimmt ein Signal QKHE, das die Einspritzmenge bei der Haupteinspritzung charakterisiert. Mit diesem Signal wird ein Verknüpfungspunkt 205 beaufschlagt. Am zweiten Eingang des Verknüpfungspunktes 205 liegt ebenfalls mit positiven Vorzeichen das Ausgangssignal einer Mengenausgleichsregelung 207. Das Ausgangssignal des Verknüpfungspunktes 205 gelangt mit positiven Vorzeichen zu einem zweiten Verknüpfungspunkt 210, der wiederum eine Maximalauswahl 215 beaufschlagt. Mit dem Ausgangssignal der Maximalauswahl 215 wird dann eine Kennfeldberechnung 220 beaufschlagt, die aus den Mengengrößen und weiteren Größen, wie beispielsweise dem Kraftstoffdruck, die Ansteuerdauer für die Injektoren bestimmt.

Am zweiten Eingang des Verknüpfungspunktes 210 liegt mit negativen Vorzeichen das Ausgangssignal eines Schaltmittels 230, das wahlweise das Ausgangssignal einer Nullwertvorgabe 238 bzw. eines Verknüpfungspunktes 240 an den Verknüpfungspunkt 210 weiterleitet. Das Schaltmittel 230 wird von einer Korrektursteuerung 235 mit Ansteuersignalen beaufschlagt. Der Verknüpfungspunkt 240 verknüpft vorzugsweise multiplikativ das Ausgangssignal einer Grundwertvorgabe 245 und das Ausgangssignal einer Gewichtungsfaktorvorgabe 260.

Der Gewichtungsfaktorvorgabe 260 wird das Ausgangssignal QKHE der Mengenvorgabe 200 und das Ausgangssignal P des Raildrucksensors 145 zugeführt. Die Grundwertvorgabe 245 verarbeitet das Ausgangssignal P des Drucksensors 145 sowie das Ausgangssignal eines Verknüpfungspunktes 250. Dem Verknüpfungspunkt 250 wird von der Mengenvorgabe 200 ein Signal, das den Abstand ABVE1 zwischen den beiden Teileinspritzungen charakterisiert, zugeleitet. Des Weiteren wird im Verknüpfungspunkt 250 ein Korrekturfaktor, der von einer Temperaturkorrektur 255 bestimmt wird, zugeleitet. Die Temperaturkorrektur 255 verarbeitet das Ausgangssignal T eines Temperatursensors 178 und das Ausgangssignal P des Druckraildrucksensors 145.

Einer Minimalwertvorgabe 270 wird ebenfalls das Ausgangssignal des Drucksensors 145 und das Ausgangssignal des Verknüpfungspunktes 250 zugeleitet. Dieses Signal gelangt zu einem Schaltmittel 280, an dessen zweiten Eingang das Ausgangssignal einer Minimalwertvorgabe 285 anlegt. Das Schaltmittel 280 leitet eines der beiden Signale, abhängig von dem Ansteuersignal einer der Korrektursteuerung 235 einen zweiten Eingang der Maximalauswahl 215 weiter.

Bei einer besonders vorteilhaften Ausgestaltung ist vorgesehen, dass auch der Einfluss einer zweiten Teileinspritzung berücksichtigt wird, die zeitlich vor der ersten Teileinspritzung liegt. Diese Ausführungsform ist gestrichelt dargestellt. Eine weitere Grundwertvorgabe 245b verarbeitet das Ausgangssignal P des Drucksensors 145 sowie das Ausgangssignal eines Verknüpfungspunktes 250b. Dem Verknüpfungspunkt 250b wird von der Mengenvorgabe 200 ein Signal, das den Abstand ABVE2 zwischen der zu korrigierenden Teileinspritzung und der Teileinspritzung deren Abstand berücksichtigt wird, charakterisiert. Das Ausgangssignal der Grundwertvorgabe 245b wird in einem weiteren Verknüpfungspunkt 248 mit dem Signal einer Wichtung 246 verknüpft, die den durch die zwischengelagerte Einspritzung abgeschwächten Einfluss berücksichtigen.

In der Mengenvorgabe 200 wird die einzuspritzende Kraftstoffmenge QKHE der Haupteinspritzung, abhängig von verschiedenen Betriebskenngrößen wie beispielsweise dem Fahrerwunsch und der Drehzahl, abgelegt. Dieser Wert wird im Verknüpfungspunkt 205 um das Ausgangssignal der Mengenausgleichsregelung 207 korrigiert. Die Mengenausgleichsregelung stellt sicher, dass alle Zylinder das gleiche Drehmoment zum Gesamtdrehmoment beitragen. Durch die Mengenausgleichsregelungen werden Streuungen der Injektoren bei der eingespritzten Kraftstoffmenge und/oder Einflüsse auf die Verbrennung, die zu ungleichen Drehmomenten führen, kompensiert.

Die so gebildete einzuspritzende Kraftstoffmenge QKHE für die Haupteinspritzung wird in dem Verknüpfungspunkt 210 mit einem Korrekturwert korrigiert, der den Einfluss der Druckschwankungen aufgrund der Testeinspritzung kompensiert. Der Korrekturwert setzt sich im wesentlichen aus dem Grundwert und einem Gewichtungsfaktor zusammen, die in dem Verknüpfungspunkt 240 multiplikativ verknüpft werden.

Der Grundwert ist in der Grundwertvorgabe 245, die vorzugsweise als Kennfeld ausgebildet ist, abgelegt. Der Grundwert wird von dem Kennfeld der Grundwertvorgabe 245 abhängig von dem Raildruck P und einem korrigierten Abstand ABVE1 zwischen den beiden Teileinspritzungen aus dem Kennfeld ausgelesen. Vorzugsweise stellt die Abhängigkeit des Grundwerts vom Abstand eine periodische Funktion, die von den Druckschwingungen beeinflusst ist. Die Grundwertvorgabe 245 berücksichtigt im wesentlichen die Frequenz der Druckschwingungen.

Wird auch der Einfluss der weiter zurückliegenden Teileinspritzung berücksichtigt, so werden zwei Grundwerte für die beiden zu berücksichtigen Teileinspritzungen gebildet. Der durch vorzugsweise additive Verknüpfung gebildete Grundwert wird entsprechend verwendet.

Der Gewichtungsfaktor wird von der Gewichtungsfaktorvorgabe 260, die ebenfalls als Kennfeld ausgebildet ist, abhängig von dem Raildruck P und der einzuspritzenden Kraftstoffmenge bei der zu korrigierenden Einspritzung vorgegeben. Die Gewichtungsvorgabe berücksichtigt im wesentlichen die Amplitude der Druckschwingungen. Anschließend werden die beiden Werte multipliziert.

Bei dieser Ausführungsform wird der Grundwert ausgehend von Größen vorgegeben, die den Raildruck P und einen korrigierten Abstand ABVE1 zwischen den beiden Teileinspritzungen charakterisieren. Der Gewichtungsfaktor wird ausgehend von Größen, die den Raildruck P und die einzuspritzende Kraftstoffmenge bei der zu korrigierenden Einspritzung charakterisieren, vorgegeben.

Mittels des Schalters 230 kann die Korrektur in bestimmten Betriebszuständen außer Funktion gesetzt werden. In diesen Betriebszuständen, in denen keine Korrektur erfolgt, wird von der Nullwertvorgabe 238 der Wert 0 als Korrekturwert vorgegeben.

Besonders vorteilhaft ist es, wenn der Abstand ABVE1 zwischen den beiden Teileinspritzungen abhängig von der Temperatur korrigiert wird. Hierzu ist in der Temperaturkorrektur 255 ein entsprechender Korrekturfaktor abhängig insbesondere von dem Raildruck P und/oder der Temperatur T abgelegt. Mit diesem Korrekturfaktor wird der Abstand ABVE1 im Verknüpfungspunkt 250 multipliziert. Entsprechend erfolgt auch eine Korrektur des Abstandes ABVE2 im Verknüpfungspunkt 250b.

Als Temperatur wird vorzugsweise die Kraftstofftemperatur, die mit einem geeigneten Sensor erfasst wird, verwendet. Die so korrigierte einzuspritzende Kraftstoffmenge QKH für die Haupteinspritzung wird in der Maximalauswahl 215 mit einer minimal darstellbaren Kraftstoffmenge verglichen. Diese wird abhängig vom Raildruck und dem Abstand ABVE1 und/oder dem Abstand ABVE2 zwischen den jeweiligen Teileinspritzungen aus einem Kennfeld mit der Minimalwertvorgabe 270 ausgelesen.

Abhängig von dem Raildruck P und des vorzugsweise temperaturkorrigierten Abstandes der beiden Teileinspritzungen aus einem Kennfeld, wird der Grundwert der Korrekturmenge berechnet. Das Kennfeld 245 enthält den Offset der Einspritzmenge mit vorgelagerter Einspritzung zur Kraftstoffmenge ohne vorgelagerte Einspritzung bei konstanter Kraftstofftemperatur als Funktion von Raildruck und dem Abstand der beiden Teileinspritzungen. Der Grundwert berücksichtigt die Abhängigkeit der Druckschwingungen und damit der Korrekturmenge vom zeitlichen Abstand der beiden Teileinspritzungen. Dabei ist dieser zeitliche Verlauf der Korrektur im geringen Umfang auch vom Raildruck abhängig.

Dieses Kennfeld wird am Pumpen- und/oder am Motorprüfstand bei den für den jeweiligen Druck typischen Einspritzmengen bzw. Einspritzdauer ermittelt. Der Abstand, der von der Mengenvorgabe 200 ermittelt wurde, wird mit dem Korrekturfaktor, der ebenfalls aus einem Kennfeld abhängig von Raildruck und Kraftstofftemperatur auslesbar ist, korrigiert und auf die Referenztemperatur des Grundkennfeldes normiert. Dieses Kennfeld wird vorzugsweise aus Kraftstoffdaten abgeleitet oder ebenfalls am Prüfstand gemessen. Der so korrigierte Abstand dient als Eingangsgröße für das Kennfeld zur Berechnung des Grundwertes.

Die aus dem Grundkennfeld berechnete Korrekturmenge wird anschließend mit dem Gewichtungsfaktor aus dem Gewichtungsfaktorvorgabe 260 abgelegten Kennfeld abhängig von Raildruck und Einspritzmenge der zu korrigierenden Einspritzung multipliziert, um die Korrekturmenge an von der im Grundkennfeld berücksichtigten Einspritzmenge abweichenden Einspritzmengen anzupassen. Dieses Kennfeld wird ebenfalls am Prüfstand für einen oder zwei feste Abstände ABVE1 zwischen den beiden Teileinspritzungen bestimmt. Diese Abstände sind so gewählt, dass bei ihm ein Mengenmaximum und/oder ein Mengenminimum im Grundkennfeld auftritt.

Der so ermittelte Korrekturwert, der den Offset zu einer Einspritzung ohne vorgelagerte Einspritzung darstellt, wird nun im Verknüpfungspunkt von der gewünschten Einspritzmenge 210 abgezogen und der Maximalwertauswahl 215 zugeführt. In der Maximalwertauswahl 215 wird dieser Wert mit einer Minimalmenge verglichen, die aus dem Kennfeld der Minimalvorgabe 270 ausgelesen wird. Die Minimalmenge wird ebenfalls abhängig vom Raildruck und vom Abstand der beiden Teileinspritzungen berechnet. Zur Ermittlung des Kennfeldes wird die Ansteuerdauer der Injektoren auf die für den jeweiligen Raildruck minimale Ansteuerdauer gesetzt.

Das oben beschriebene erfindungsgemäße Verfahren lässt sich nun durch Modifikation der in Fig. 5 gezeigten Vorrichtung implementieren, wobei die beschriebenen Lernphasen durch nachfolgend beschriebene Rückführzweige realisiert sind.

In der Fig. 5 sind die beschriebenen drei Varianten der erfindungsgemäßen Rückführung eingezeichnet. Da in der Praxis alle Fehlerarten vorkommen, wird in dem vorliegenden Ausführungsbeispiel die praktische Umsetzung eines Eingriffs für einen beliebigen Fehler gezeigt. Zudem wird im Folgenden, exemplarisch für alle möglichen Fehlerarten, ein Amplitudenfehler angenommen. In Fällen von anderen oder gemischten Fehlern, kann es vorteilhaft sein, andere Schnittstellen als die gezeigte Schnittstelle bei der Druckwellenkompensation zu verwenden.

Wird bei der Prüfung in Schritt 350 gemäß der Fig. 3 eine positive Regelabweichung festgestellt, d.h. die gemessene Einspritzmenge der beiden Testeinspritzungen TE1 und TE2 ist größer als eine vorgegebene Sollmenge, wird ein positiver Korrekturwert berechnet 292 und dieser Wert mit dem Ausgang der Struktur 260 (Fig. 5) an einem Verknüpfungspunkt 290 verknüpft. Diese Verknüpfung 290 kann additiv, multiplikativ oder auf andere komplexe Weise, bspw. anhand einer Kennlinie, erfolgen. Die genannte Erhöhung der gemessenen Einspritzmenge führt zu einem vergrößerten Ergebnis der logisch nachfolgenden Verknüpfung 240 und aufgrund des negativen Vorzeichens zu einer Verringerung des Ergebnisses am Ausgang der wiederum logisch nachfolgenden Verknüpfung 210. Dadurch wird die resultierende Ansteuerdauer ebenfalls verringert. Bei der darauf folgenden Kalibriersequenz ergibt sich demnach in Schritt 345 (Fig. 3) eine verringerte Einspritzmenge.

Die beschriebene Iteration wird so lange durchgeführt, bis das in der Fig. 3 gezeigte Kriterium 350 erfüllt ist und in diesem Fall dann zu Schritt 360 übergegangen wird.

Im Falle eines Phasenfehlers kann die Rückführung 296 alternativ hinter Block 200 mittels einer Verknüpfung 294 erfolgen, wodurch der genannte Abstand ABVE1 festgelegt wird. Dies führt zu einer Variation des Ergebnisses der logisch nachfolgenden Verknüpfungsstelle 250 und somit implizit, nämlich über die Elemente 245, 249, 240, ..., zu einer Variation des Ergebnisses der logisch schließlich folgenden Verknüpfungsstelle 210.

Falls die Art des vorherrschenden Fehlers unbekannt ist, oder mehrere Fehlerarten gleichzeitig vorkommen, kann es vorteilhaft sein, eine Rückführung 299 am Ausgang der Verknüpfung 240 an einer logisch nachfolgenden Verknüpfung 298 anzuordnen. Eine solche Verknüpfung kann wiederum additiv, multiplikativ oder in der genannten komplexen Weise erfolgen. Eine solchen Anordnung sorgt ebenfalls über die Verknüpfung 210 für einen Durchgriff in den genannten Iterabionsprozess.

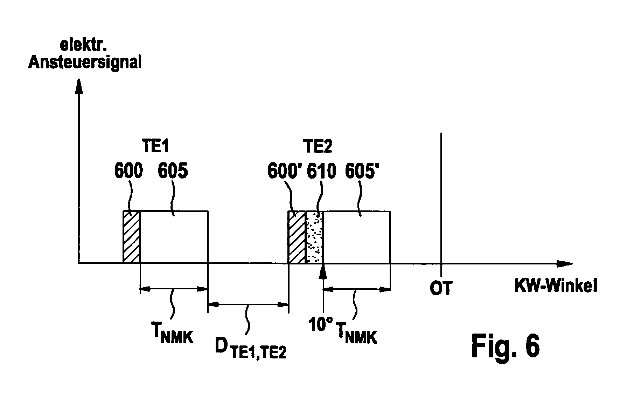

In der Fig. 6 ist ein typischer Zeitablauf zweier zeitlich aufeinander folgender Testeinspritzungen TE1 und TE2 dargestellt, bei denen jeweils die genannte "Gegendruckkompensation" durchgeführt wird. In dem gezeigten Diagramm ist das elektrische Ansteuersignal eines nicht gezeigten Einspritzsystems in Abhängigkeit vom Kurbelwellenwinkel (KW-Winkel) aufgetragen. Zusätzlich eingezeichnet ist der obere Totpunkt (OT). Als "Totpunkte" bezeichnet man die Stellungen der Kurbelwelle eines Verbrennungsmotors, in denen der Kolben keine Bewegung mehr in axialer Richtung ausführt. Die Lage der Totpunkte wird durch die Geometrie von Kurbelwelle, Pleuel und Kolben eindeutig bestimmt. Man unterscheidet dabei zwischen oberem Totpunkt (OT) (die Kolbenoberseite befindet sich nah am Zylinderkopf) und dem unteren Totpunkt (UT) (die Kolbenoberseite ist entfernt vom Zylinderkopf).

Die Testeinspritzung TE1 setzt sich vorliegend aus zwei Steuersignalkomponenten 600, 605 zusammen. Bei der Komponente 600 handelt es sich einen Korrekturterm aufgrund der genannten Gegendruckkompensation, wohingegen es sich bei der zweiten Komponente 605 einen aus der Nullmengenkalibrierung (NMK) resultierenden Term handelt, und zwar mit einer zeitlichen Länge T_{NMK}· Die Grö-βe T_{NMK} beinhaltet gemäß dem Stand der Technik bereits die genannte IMA sowie ein oben beschriebenes Ansteuerdauerkennfeld.

Nach einer zeitlichen Verzögerung D_{TE1,TE2} erfolgt vorliegend die zweite Teileinspritzung TE2. Das Ansteuersignal setzt sich wiederum aus einem ersten sich aus der Gegendruckkompensation ergebenden Korrekturterm 600' und einem zweiten sich aus der Nullmengenkalibrierung ergebenden Term 605' zusammen. Durch die Strichelung soll angedeutet werden, dass die Terme 600 und 600' respektive 605 und 605' nicht notwendiger Weise identisch sind.

Im Unterschied zur ersten Testeinspritzung TE1 enthält das Ansteuersignal einen weiteren sich aus der Druckwellenkompensation (DWK) ergebenden Korrekturterm 610, welcher auch die oben beschriebene Iteration mittels Rückführung umfasst. Die Ansteuerkomponente 610 endet in dem vorliegenden Ausführungsbeispiel bei einem KW-Winkel von 10°.

Es ist schließlich hervorzuheben, dass sich das zuvor beschriebene Verfahren und die Vorrichtung ohne Weiteres auf mehr als zwei Teileinspritzungen verallgemeinern lassen, denn das gleiche Prinzip kann auch für mehr als zwei Einspitzungen angewendet werden lediglich durch Nachschalten einer dritten Lernphase unter Verwendung von drei Testeinspritzungen usw.

## Patentansprüche

1. Verfahren zur Steuerung eines Einspritzsystems einer Brennkraftmaschine, bei dem wenigstens zwei zeitlich aufeinander folgende Teileinspritzungen mittels Druckwellenkompensation kompensiert werden, **dadurch gekennzeichnet, dass** bei einem Zylinder der Brennkraftmaschine wenigstens zwei Testeinspritzungen mit einem vorgegebenen zeitlichen Abstand zueinander angesteuert werden, dass die Gesamteinspritzmenge der wenigstens zwei Testeinspritzungen ermittelt wird und dass eine Abweichung zwischen der ermittelten und einer erwarteten Gesamteinspritzmenge als Fehler der Druckwellenkompensation angenommen wird und daraus eine Korrektur für die Druckwellenkompensation bestimmt wird, und dass die wenigstens zwei Testeinspritzungen im Schubbetrieb der Brennkraftmaschine durchgeführt werden.

2. Verfahren nach Anspruch 1, **dadurch gekennzeichnet, dass** bei der Ansteuerung der wenigstens zwei Testeinspritzungen eine zuvor mittels Nullmengenkalibrierung ermittelte Driftkorrektur angewendet wird.

3. Verfahren nach Anspruch 1 oder 2, **dadurch gekennzeichnet, dass** bei der Ermittlung der genannten Gesamteinspritzmenge der wenigstens zwei Testeinspritzungen eine zuvor mittels Nullmengenkalibrierung ermittelte Driftkorrektur angewendet wird.

4. Verfahren nach einem der vorhergehenden Ansprüche, **dadurch gekennzeichnet, dass** die genannte Korrektur für die Druckwellenkompensation durch Verändern wenigstens eines Ansteuerparameters variiert wird, bis die ermittelte Gesamteinspritzmenge die Summe der Solleinspritzmengen der wenigstens zwei Testeinspritzungen ergibt.

5. Verfahren nach Anspruch 4, **dadurch gekennzeichnet, dass** die sich ergebende Korrektur nicht-flüchtig, bevorzugt in einen EEPROM des Einspritzsystems oder eines Steuergeräts der Brennkraftmaschine, gespeichert wird und im befeuerten Betrieb der Brennkraftmaschine bzw. im Fahrbetrieb eines zugrunde liegenden Kraftfahrzeugs bei der Druckwellenkompensation angewendet wird.

6. Verfahren nach einem der vorhergehenden Ansprüche, **gekennzeichnet durch** eine erste Lernphase (300), in der eine Teileinspritzung angesteuert wird (315) und bei der eine Nullmengenkalibrierung durchgeführt wird sowie **durch** eine wenigstens zweite Lernphase (305), in der die wenigstens zwei Testeinspritzungen angesteuert werden, nämlich unter Berücksichtigung einer aus der ersten Lernphase (300) resultierenden Mindestansteuerdauer, in der eine Druckwellenkompensation des Druckwelleneffekts der ersten Testeinspritzung auf die wenigstens zweite Testeinspritzung durchgeführt wird (340) und in der die Gesamteinspritzmenge der beiden Testeinspritzungen mittels Nullmengenkalibrierung ermittelt wird (345).

7. Verfahren nach einem der vorhergehenden Ansprüche, **dadurch gekennzeichnet, dass** als Stellgröße bei der Druckwellenkompensation ein Amplitudenfehler und/oder ein Phasenfehler und/oder ein Frequenzfehler berücksichtigt wird/werden.

8. Vorrichtung zur Steuerung eines Einspritzsystems einer Brennkraftmaschine welche ein Verfahren nach einem der vorherigen Ansprüche durchführt, wobei wenigstens zwei zeitlich aufeinander folgende Teileinspritzungen mittels Druckwellenkompensation kompensiert werden, **gekennzeichnet durch** Korrekturmittel (292, 296, 299), mittels derer, in Abhängigkeit von der Abweichung zwischen einer gemessenen Einspritzmenge der wenigstens zwei Teileinspritzungen von einer vorgegebenen Sollmenge der Gesamteinspritzung der wenigstens zwei Teileinspritzungen, ein Korrekturwert ermittelt wird.

9. Vorrichtung nach Anspruch 8, dass der berechnete Korrekturwert mittels wenigstens einer Verknüpfung (290, 294, 298) so in die Vorrichtung zur Steuerung des Einspritzsystems eingespeist wird, dass sich eine resultierende Ansteuerdauer verringert.

10. Vorrichtung nach Anspruch 9, **dadurch gekennzeichnet, dass** die besagte wenigstens eine Verknüpfung (290, 294, 298) additiv oder multiplikativ oder auf andere komplexe Weise, bevorzugt anhand einer Kennlinie, erfolgt.

## Claims

1. Method for controlling an injection system of an internal combustion engine, in which at least two consecutive partial injections are compensated by means of pressure wave compensation, **characterized in that** in a cylinder of the internal combustion engine at least two partial injections are actuated at a predefined time interval from one another, **in that** the overall injection quantity of the at least two partial injections is determined, and **in that** a deviation between the determined and an expected overall injection quantity is assumed to be an error of the pressure wave compensation and a correction for the pressure wave compensation is determined therefrom, and **in that** the at least two partial injections are carried out in the overrun mode of the internal combustion engine.

2. Method according to Claim 1, **characterized in that** when the at least two partial injections are actuated, a drift correction which has been previously determined by means of zero quantity calibration is applied.

3. Method according to Claim 1 or 2, **characterized in that** during the determination of the specified overall injection quantity of the at least two partial injections, a drift correction which has been previously determined by means of zero quantity calibration is applied.

4. Method according to one of the preceding claims, **characterized in that** the specified correction for the pressure wave compensation is varied by changing at least one actuation parameter until the overall injection quantity which is determined yields the sum of the setpoint injection quantities of the at least two partial injections.

5. Method according to Claim 4, **characterized in that** the resulting correction is stored in a non-volatile fashion, preferably in an EEPROM of the injection system or a control unit of the internal combustion engine and is applied in the activated mode of the internal combustion engine or in the driving mode of a motor vehicle which is used as the basis for the pressure wave compensation.

6. Method according to one of the preceding claims, **characterized by** a first learning phase (300) in which a partial injection is actuated (315) and in which a zero quantity calibration is carried out and by an at least second learning phase (305) in which the at least two partial injections are actuated, specifically taking into account a minimum actuation period which results from the first learning phase (300) in which pressure wave compensation of the pressure wave effect of the first test injection is carried out (340) on the at least second test injection and in which the overall injection quantity of the two test injections is determined by means of zero quantity calibration (345).

7. Method according to one of the preceding claims, **characterized in that** an amplitude error and/or a phase error and/or a frequency error are/is taken into account as an actuation variable during the pressure wave compensation.

8. Device for controlling an injection system of an internal combustion engine which carries out a method according to one of the preceding claims, wherein at least two consecutive partial injections are compensated by means of pressure wave compensation, **characterized by** correction means (292, 296, 299) by means of which a correction value is determined as a function of the deviation between a measured injection quantity of the at least two partial injections from a predefined setpoint quantity of the total injection of the at least two partial injections.

9. Device according to Claim 8, **characterized in that** the calculated correction value is injected, by means of at least one logic operation (290, 294, 298), into the device for controlling the injection system, in such a way that a resulting actuation period is reduced.

10. Device according to Claim 9, **characterized in that** said at least one logic operation (290, 294, 298) is carried out additively or multiplicatively or in another complex way preferably on the basis of a characteristic curve.

## Revendications

1. Procédé de commande du système d'injection d'un moteur à combustion interne, dans lequel au moins deux injections partielles qui se succèdent dans le temps sont compensées au moyen d'une compensation d'ondes de pression,
**caractérisé en ce que**
au moins deux injections de test sont commandées dans un cylindre du moteur à combustion interne à un intervalle temporel prédéterminé l'une par rapport à l'autre,
**en ce que** la quantité totale injectée lors des deux ou plusieurs injections de test est déterminée,
**en ce que** l'écart entre la quantité totale injectée déterminée et une quantité totale injectée attendue est posé comme étant un défaut de la compensation d'ondes de pression et une correction de la compensation d'ondes de pression en est déterminée et
**en ce que** les deux ou plusieurs injections de test sont exécutées lorsque le moteur à combustion interne fonctionne en poussée.

2. Procédé selon la revendication 1, **caractérisé en ce qu'**une correction de dérive déterminée préalablement au moyen d'un étalonnage d'une quantité nulle est appliquée lors de la commande des deux ou plusieurs injections de test.

3. Procédé selon les revendications 1 ou 2, **caractérisé en ce qu'**une correction de dérive déterminée préalablement au moyen d'un étalonnage d'une quantité nulle est appliquée lors de la détermination de ladite quantité totale injectée dans les deux ou plusieurs injections de test.

4. Procédé selon l'une des revendications précédentes, **caractérisé en ce que** ladite correction de la compensation d'ondes de pression est modifiée par modification d'au moins un paramètre de commande jusqu'à ce que la quantité totale injectée déterminée représente la somme des quantités injectées de consigne dans les deux ou plusieurs injections de test.

5. Procédé selon la revendication 4, **caractérisé en ce que** la correction obtenue est conservée en mémoire non volatile, de préférence dans une EEPROM du système d'injection ou d'un appareil de commande du moteur à combustion interne, et est utilisée pour la compensation d'ondes de pression lorsque le moteur à combustion interne est en fonctionnement ou lorsque le véhicule automobile concerné est en mode de roulage.

6. Procédé selon l'une des revendications précédentes, **caractérisé par** une première phase d'apprentissage (300) dans laquelle une injection partielle est injectée (315) et un étalonnage de la quantité nulle est réalisé, ainsi que par au moins une deuxième phase d'apprentissage (305) dans laquelle les deux ou plusieurs injections de test sont commandées en tenant compte d'une durée minimale d'activation qui résulte de la première phase d'apprentissage (300), dans laquelle une compensation de l'effet d'ondes de pression de la première injection de test sur la ou les deuxièmes injections de test est réalisée (340) et dans laquelle la quantité totale injectée des deux injections de test est déterminée (345) au moyen d'un étalonnage de la quantité nulle.

7. Procédé selon l'une des revendications précédentes, **caractérisé en ce que** la compensation d'ondes de pression tient compte comme grandeur de commande d'une erreur d'amplitude, d'une erreur de phase et/ou d'une erreur de fréquence.

8. Dispositif de commande d'un système d'injection d'un moteur à combustion interne,
le dispositif exécutant un procédé selon l'une des revendications précédentes,
au moins deux injections partielles se succédant mutuellement dans le temps étant compensées au moyen d'une compensation d'ondes de pression,
**caractérisé par**
des moyens de correction (292, 296, 299) au moyen desquels une valeur de correction est déterminée en fonction de l'écart entre une quantité injectée mesurée sur les deux ou plusieurs injections de test par rapport à une quantité de consigne prédéterminée de l'injection totale des deux ou plusieurs injections partielles.

9. Dispositif selon la revendication 8, **caractérisé en ce que** la valeur de correction calculée au moyen d'au moins une relation (290, 294, 298) est injectée dans le dispositif de commande du système d'injection de manière à diminuer la durée d'activation résultante.

10. Dispositif selon la revendication 9, **caractérisé en ce que** ladite ou lesdites relations (290, 294, 298) s'effectuent par addition, par multiplication ou d'une autre manière complexe, de préférence à l'aide d'une ligne caractéristique.
